# EUROPEAN PATENT APPLICATION

(11) **EP 1 841 243 A2**
(43) Date of publication of application: **03.10.2007**
(21) Application number: 07104708.8
(22) Date of filing: 22.03.2007
(51) Int. Cl.: H04Q 7/22

(54) **Method and apparatus for provisioning network services**

(30) Priority: 28.03.2006 GB 0606209
(71) Applicant: Orange Personal Communications Services Ltd., Bradley Stoke, Bristol BS32 4QJ (GB)
(72) Inventor: Crook, Michael David Stanmore, NP26 4QH (GB)
(74) Representative: McCann, Heather Alison

(57) **Abstract**

Embodiments of the invention are concerned with providing network services to subscribers by supplementing a network subscription registered in respect of a first subscriber with services that are available to a second subscriber.

More specifically, embodiments of the invention provide a method of providing a network service to a subscriber of a network, the subscriber having access to a first set of network services (S1) defined by a first subscriber identifier (MSISDN1), and wherein said network service to be provided is a member of a second set of services (S2), different to said first set of services, said second set of services (S2) being associated with a second subscriber identifier (MSISDN2) and the network service being provided by a service node (33) from which a subscriber associated with the second subscriber identifier is able to receive service during processing of a network event, the method comprising:
transmitting (S4.5; S5.5; S6.2) a first service initiation request message (M1) to a proxy node, the first service initiation request message including said data identifying said second subscriber identifier;
in response to receipt of the first service initiation request, formulating (S4.6; S5.6; S6.3) a second service initiation request message (M2) on the basis of the first service initiation request message; and
transmitting (S4.7; S5.7; S6.4) the second service initiation request message (M2) to the service node (33) so as to trigger provision of said network service in respect of the subscriber.

## Description

### Field of the Invention

The present invention relates to a method of, and apparatus for, providing network services to subscribers; embodiments of the invention are particularly, but not exclusively, suited to supplementing a network subscription registered in respect of a first subscriber with services that are available to a second subscriber.

### Background of the Invention

The provision of mobile network services is based on the concepts of authentication and network subscription: in order to make use of a network service, access to both the network and to the service has to be authenticated by the network and the service, and the data required for authentication, at both levels, are specified in a subscription that is identified by means of a subscriber identifier.

In view of the fact that access to respective network services is chargeable, network services typically include various safe-guards to protect against unauthorised access: by unauthorised access is meant access by a user who has not subscribed to a service. In some circumstances, however, it would be desirable for a phone to do exactly that and act as if it were another in order to access services other than those forming part of the subscription associated with the phone. It will be appreciated that such a feature is difficult to implement within the framework of mobile networks, not least because of the various safe-guards mentioned above and the various complexities associated with charging for services utilised by a subscriber other than the one registered with the network.

It is nevertheless an object of embodiments of the present invention to provide a system and method in which a user can access services other than those forming part of his network subscription.

### Summary of the Invention

In accordance with a first aspect the present invention, there is provided a method of providing a network service to a subscriber of a network, the subscriber having access to a first set of network services defined by a first subscriber identifier, and wherein said network service to be provided is a member of a second set of services, different to said first set of services, said second set of services being associated with a second subscriber identifier and the network service being provided by a service node from which a subscriber associated with the second subscriber identifier is able to receive service during processing of a network event, the method comprising:
transmitting a first service initiation request message to a proxy node, the first service initiation request message including said data identifying said second subscriber identifier;
in response to receipt of the first service initiation request, formulating a second service initiation request message on the basis of the second subscriber identifier data; and
transmitting the second service initiation request message to the service node so as to trigger provision of said network service in respect of the subscriber.

Thus, embodiments of the invention provide a mechanism for subscribers to access a different set of services - in other words services that are different to those that the network associates with their network identifier. In one arrangement this is facilitated by supplementing the first set of network services so as to include trigger data corresponding to various transforming nodes, in the form of proxy nodes, which, when triggered, are capable of transforming the network identifier associated with the subscriber into the second subscriber identifier data.

It will be appreciated that by using a proxy node to formulate the second service initiation request message, the existing service nodes do not require modifying; since such service nodes are typically provided and maintained by third party providers it is clearly advantageous to be able to extend the functionality of such service nodes without affecting the service nodes themselves.

The data identifying the second subscriber identifier might be derivable from the first service initiation request message (e.g. the identity of the called party accompanying the first service initiation request message), it might be contained within the first service initiation request message, or it might be held by the proxy node. This second network identifier is one whose set of services includes a service provided by the service node and the invention can be particularly conveniently applied in the context of Line 2 subscribers, where, for example, the proxy node can be configured to provide access to services only associated with Line 2 when the active Line is Line 1.

In another arrangement the second subscriber identifier is an identifier other than one associated with the terminal registered with the network, and the invention can be applied to allow a user to specify the second subscriber identifier in a call set-up message. Once received at a switch node, the second subscriber identifier is transmitted to the proxy node in dependence on various trigger data also included in the call set-up message, and, when received, the proxy node can retrieve a set of services associated with the explicitly specified identifier.

Instead of the second subscriber identifier being specified during a call set-up procedure, the second subscriber identifier can be specified in a specific services request sent to the network, with the result that all subsequent call and messaging set-up processes make use of any of the services associated with the second subscriber identifier.

In accordance with a further aspect of the invention there is provided a data communications device or system configured to receive, formulate and transmit messages as described above and computer software comprising a set of instructions arranged, in use, to perform the method steps described above. It will be appreciated that a network node configured so as to have the functional characteristics associated with the proxy node is a novel and distinctive addition to telecommunications systems.

Further features and advantages of the invention will become apparent from the following description of preferred embodiments of the invention, given by way of example only, which is made with reference to the accompanying drawings.

### Brief Description of the Drawings

Figure 1 is a schematic block diagram showing various components of a standard configuration of a mobile network
Figure 2 is a schematic block diagram showing a selection of components making up a conventional intelligent network shown in Figure 1;
Figure 3 is a schematic block diagram showing a selection of components making up an intelligent network according to an embodiment of the invention;
Figure 4 is a schematic flow diagram showing components involved in the transmission of messages between various components shown in Figure 3 according to a first embodiment of the invention;
Figure 5 is a timing diagram showing the flow of messages between various of the components shown in Figure 3 according to a second embodiment of the invention; and
Figure 6 is a timing diagram showing the flow of messages between various of the components shown in Figure 3 according to a third embodiment of the invention.

In the accompanying figures, those parts and steps that are common between embodiments are allocated the same reference number, whilst those that are particular to a specific embodiment are allocated a distinct reference number.

### Detailed Description of the Invention

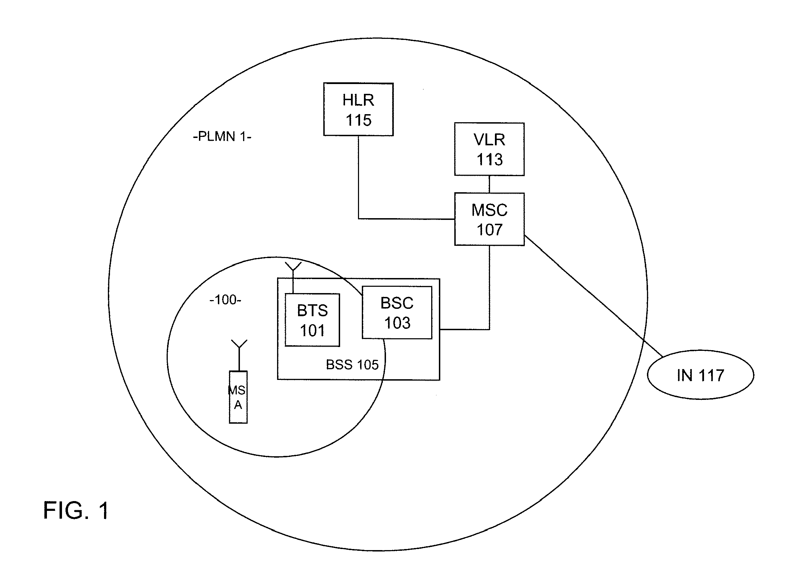

Embodiments of the invention are concerned with provision of network services to a subscriber, in particular with selectively providing services other than those forming part of the subscriber's set of services. In order to appreciate the level at which embodiments of the invention operate, an overview of a Public Land Mobile Network (PLMN) 1, within which such embodiments can operate, will first be described with reference to Figure 1.

The PLMN network shown in Figure 1 comprises a cellular network such as a GSM or UMTS network (only one cell 100 being shown in Figure 1). The cell 100 has a limited coverage and is served by the PLMN 1 via a Base Transceiver Station (BTS) 101 and a Base Station Controller (BSC) 103, which form a Base Station System (BSS) 105. The BSC 103 is connected to a Mobile Switching Center (MSC) 107 which is an exchange and is arranged to perform all switching functions for mobile stations such as MS A located in a geographical area designated as the MSC area. As shown in Figure 1, the MSC 107 is connected to an Intelligent Network IN 117 that is arranged, on the basis of the network subscription associated with MS A, to provide MS A with access to various intelligent network services.

In operation, the MSC 107 takes into account the impact of the allocation of radio resources and the mobile nature of the subscribers, and performs procedures required for location registration, hand-over of, and call set-up for, served mobile stations. The MSC 107 is connected to a Home Location Register (HLR) 115, which is a database arranged to manage subscription data relating to mobile subscribers such as MS A. The PLMN 1 may include one or several HLRs 115, depending on the number of mobile subscribers, the capacity of the equipment and the organization of the PLMN network 1. The HLR 115 is arranged to store data identifying the location of mobile subscribers managed by each HLR 115 (e.g. in order to be able to route calls thereto); identification numbers attached to each mobile subscription (e.g. International Mobile Subscriber identity (IMSI); Mobile Subscriber ISDN Number (MSISDN)); communication service subscription information, service restrictions (e.g. roaming limitations); general subscriber attributes and preferences; and supplementary service information including parameters associated with these services.

Additionally, the MSC 107 is connected to a Visitor Location Register (VLR) 113, which is arranged, as in known configurations, to receive data from mobile subscribers MS in this MSC 107 area and pass this information onto the HLR 115. For example, when MS A is in the location area of the VLR 113, the VLR 113 starts an allocation updating procedure, whereby the MSC 107 transfers the identity of the location area in which MS A is situated to the VLR 113. Having received this identity, the VLR 113 sends the location identity to the HLR 115, which transmits authentication data to the VLR 113, enabling the VLR 113 to authenticate, or otherwise, the attempt to register with the PLMN 1 (by MS A). In the event that MS A is successfully authenticated, the VLR 113 indicates this to the HLR 115, whereupon data corresponding to the subscription, including data indicating sets of services and triggers available to MS A, are downloaded to the VLR 113.

In terms of communication between the various components of the PLMN 1, the MSC 107, HLR 115 and VLR 113 may send and receive data via a variety of signaling protocols, including but not limited to, Signaling System Number (SS#7) Mobile Application Part (MAP).

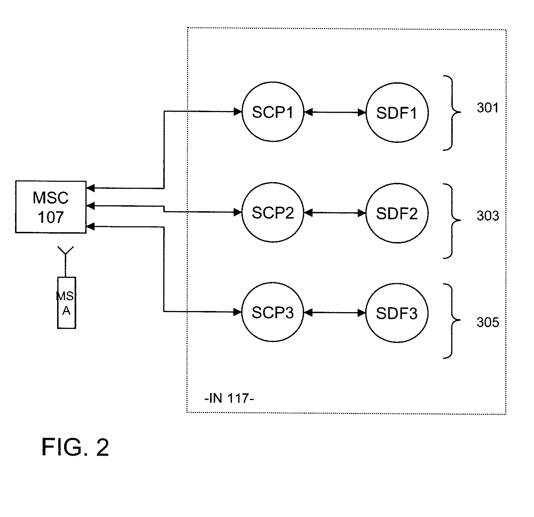

Figure 2 shows, in more detail, the various network components making up a conventional intelligent network IN 117: as is known in the art, an intelligent network IN is essentially a collection of services that can be provided to a subscriber via a network operator's infrastructure. A standard way of implementing a given service is via a set of components comprising a service switching point (SSP), a service control point (SCP), and a service data function (SDF). An SSP is typically embodied within a switch MSC and acts as the trigger point for further services to be invoked during a call; an SCP contains service logic required to provide the service particular to a given IN service; and an SDF is a database that contains additional subscriber data, or other data required to process a call. The SDF may be a separate platform to, or co-located within, the SCP.

Figure 2 shows a conventional arrangement of three sets of IN services 301, 303, 305; access to any of these services by a subscriber is dependent on subscription data held for that subscriber by the HLR 115. Typically the subscriber data include a set of triggers, each corresponding to a network service, and thus set of components SSPi, SCPi, SDFi. A request for a given network service from MS A is reviewed by the various SSPs associated with the MSC 107, and, in the event that the request message includes data corresponding to a trigger stored at the MSC 107, a service request message is transmitted to an appropriate SCP. Provision of the service is then controlled by the SCP in conjunction with the various nodes underpinning the PLMN 1 network.

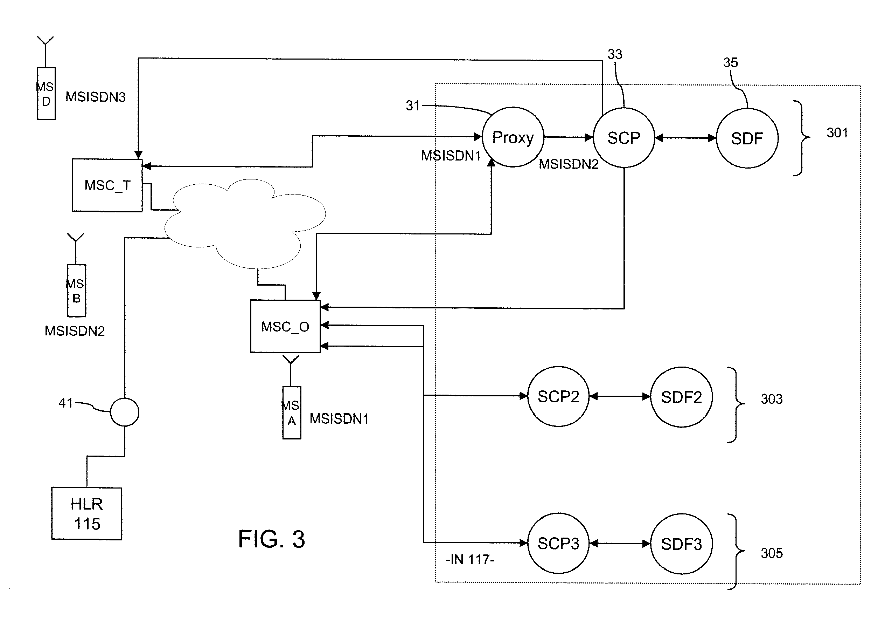

It will be appreciated from the foregoing that under normal circumstances a subscriber's access to network services is limited so as to exclude those with which he has not registered. For example and with reference to Figure 3, if MS A (having MISISDN1) has not registered for service 301, but MS B and MS D (having MSISDN2, MSISDN3) have, the service node SCP 33 will only be triggered to provide a service in respect of requests associated with the latter two network identifiers MSISDN2, MSISDN3.

Embodiments of the invention include an additional network node (proxy 31), which transforms network identifiers from one (MSISDN1) that is not registered for service 301 to one (MSISDN2) that is registered for service 301, and transmits a request for network service to the SCP 33 on the basis of the transformed network identifier. In order to access the proxy node 31, the subscription data held in the HLR 115 for MS A include triggers associated with the proxy 31; thus when the subscription data have been downloaded to the VLR 113 (e.g. during a Location Update procedure), the signalling associated with those network access requests including such a trigger can be routed to the proxy 31. The proxy node 31 comprises functionality to identify an alias (e.g. MSISDN2) for the network identifier MSISDN1, and to send a service request to the SCP 33 on the basis of the identified alias MSISDN2. The SCP 33 then provides service to MS A as if it were MS B.

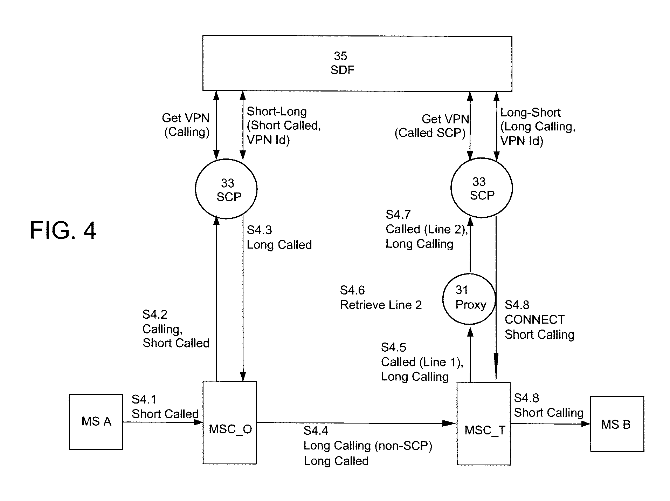

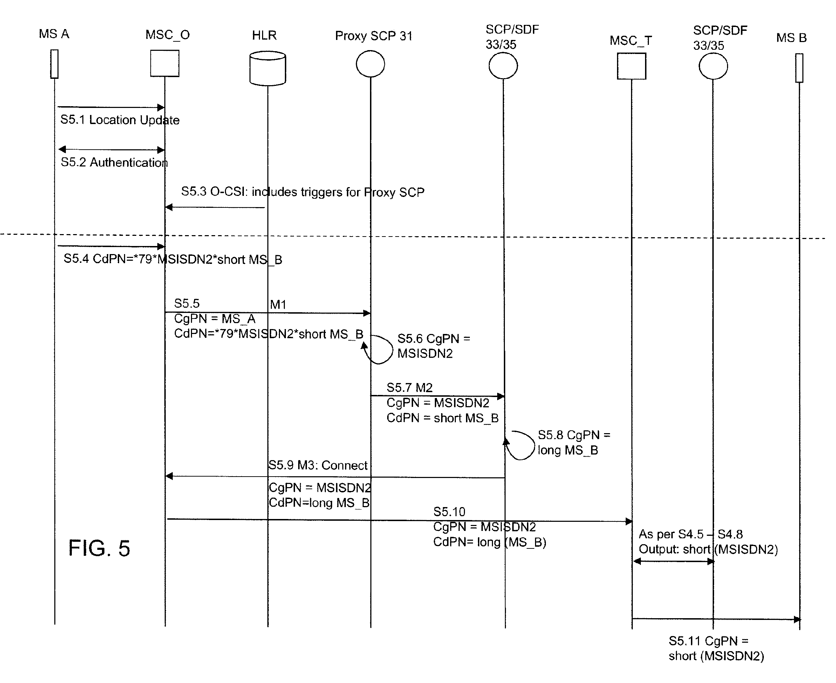

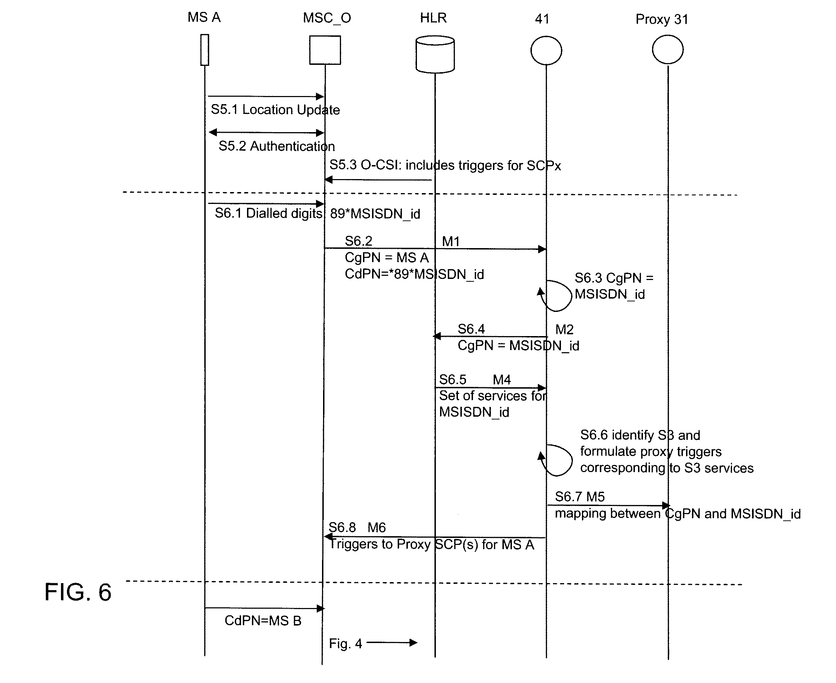

The functionality of the proxy node 31 will now be described in more detail with reference to Figure 4, in which service node SCP 33 provides a service that allows users to dial each other using short numbers. In this example MS A has placed a call to MS B; the called party MS B has a Line 2 subscription, which is to say that calls can be made by one device from, and received by one device at, more than one number or line (namely MSISDN1 and MSISDN2). Each line has a distinct subscription (and thus access to sets of services) associated therewith and in use the device MS B can only operate in accordance with one of the lines (and thus access only one set of services). In the example, the subscription associated with Line 2 includes the short calling service, but that associated with Line 1 does not, and the subscription associated with the calling party (MS A) includes the short calling service.

At step S4.1 MS A dials a short number for MS B; the call request is received by the switch to which MS A has registered (MSC_O), and because subscription data for MS A (identifying service node 33) are stored at the switch MSC_O, the switch sends a signalling message to the SCP 33; the SCP 33 processes the received data, outputting the full digits corresponding to the short number for MS B (MSISDN1) and transmitting this to the switch MSC_O (steps S4.2, S4.3). In accordance with conventional methods, the originating switch MSC_O determines a terminating switch MSC_T with which the called party MS B is registered, and sets up a voice circuit within the switching network (step S4.4). Once the connection request has been received at terminating switch MSC_T, and on the basis of terminating trigger data held by the VLR in respect of the currently active line of MS B (Line 1), the switch is triggered to send a signalling message to the proxy node 31 (step S4.5).

Once received by the proxy node 31, the node 31 retrieves data held in association with the called number, which in this example is a network identifier identifying the second line, Line 2 (step S4.6). Thus the alias for MS B in the present example is MSISDN2 corresponding to Line 2, and transformation involves the proxy 31 retrieving the network identifier MSISDN2; this alias might be accessible to the proxy node 31 from a query on the HLR 115 or as part of an independent provisioning process. The proxy node 31 then sends a service request message to the SCP 33, based on alias MSISDN2 identifying the called party MS B, as per any standard request for service from the node SCP 33. The service node SCP 33 identifies a short number associated with the calling party and sends a CONNECT message to the switch MSC_T (step S4.7), causing the switch MSC_T to identify the calling party MS A using the short number returned by the SCP 33.

In the example discussed above, in the absence of a process according to embodiments of the invention, the full number of a calling party would be presented to called party MS B; whilst this will sometimes be the caller's MSISDN, in some circumstances it will be a special routing number (for example in relation to calls received from office extensions), which is meaningless to the called party.

It will be appreciated that the invention provides a means of circumventing the otherwise mutually exclusive relationship between Line 1 and Line 2 (this being the inevitable result of having to select one of the lines when making use of network services): when a line without access to a given service is the currently selected line, embodiments of the invention provide a means for the user to access this given service.

It will also be appreciated that by implementing the transformation service within a proxy node, no modifications are required to be made to the service node SCP 33; since such service nodes are typically provided and maintained by third party providers it is clearly advantageous to be able to extend the functionality of such service nodes without affecting the service nodes themselves.

A second example will now be described with reference to Figure 5, for the case where, as far as the network is concerned and in respect of a particular network service (e.g. a particular telephone call), MS A appears to be a different mobile station. As described above, as a result of MS A registering with the network, the originating switch MSC_O stores services data and triggers including originating triggers that correspond to certain proxy nodes such as proxy node 31. In this example the trigger for proxy node 31 relates to originating calls that are prefixed with "*79" such that, when the subscriber subsequently makes a call to mobile station MS B and formulates the digits of the called party as "*79*MSISDN2*short MS_B" (step S5.4), the originating switch MSC_O sends a signalling message M1 to the proxy node 31 - the message M1 comprising "*79*MSISDN2*short MS_B" (step 55.5).

Once received by the proxy node 31, the node 31 looks up rules associated with service request messages beginning with the digits "79"; in the present example the rules are configured so as to cause the proxy node 31 to retrieve the network identifier immediately following the digits "79" within the called number (in the present example this network identifier is MSISDN2) and substitute the calling party number CgPN for this retrieved network identifier (step S5.6). Thus the alias for MS A in the present example is MSISDN2 and transformation involves stripping out a network identifier that is encapsulated within the called number.

The proxy node 31 then sends a service request message M2 to the SCP 33, based on alias MSISDN2 identifying the calling party MS A. As described above, network identifier MSISDN2 has subscribed to the short number service provided by SCP 33, so in response to receipt of the service request message M2, the service node 33 identifies a long calling number associated with the called party MS B (step S5.8) and formulates a CONNECT message, for sending to the originating switch MSC_O. Once received, the originating switch MSC_O sets up a circuit connection with MSC_T (identified as being the switch to which the called party MS B is connected) on the basis of the long dialling form of MS B, and because in this example MS B has also subscribed to the service provided by SCP 33, subsequent steps progress as per steps S4.7 and S4.8 described previously.

It will thus be appreciated that in this example the called party MS B will think that a party other than MS A is making the call, since the transformed network identifier - MSISDN2 - is associated with a different subscription.

A further example will now be described with reference to Figure 6, for the case where, as far as the network is concerned and in respect of all network services (e.g. all telephone calls), MS A appears to be a different mobile station. The registration steps S5.1 - S5.3 progress as described above such that the originating switch stores originating trigger data corresponding to a set S1 of services accessible by MS A; in this third embodiment the originating triggers include a trigger corresponding to a service node 41, the trigger taking the form of a prefix *89. In response to receipt of a service request message containing the *89 prefix followed by a network identifier MSISDN_id (step S6.1), a signalling message M1, containing MSISDN_id is routed by the originating switch MSC_O to the service node 41 (step S6.2). When received, the service node 41 retrieves the network identifier MSISDN_id from within the signalling message (step S6.3) and transmits this identifier MSISDN_id to the HLR 115 within signalling message M2 (step S6.4). This triggers the HLR 115 to download a set of subscriber data S2 corresponding to MSISDN_id from the HLR 115 to the service node 41 within signalling message M4 (step S6.5).

Once message M4 has been received by the service node 41, a set S3 of services within set S2 that are not part of the set S1 associated with MS A is identified. For at least some, and preferably all, of the services in this further set S3, the service node 41 identifies triggers for the associated proxy SCPs (step S6.6), and sends data indicative of these triggers to the originating switch MSC_O (step S6.8) in a signalling message M6. Additionally the service node 41 transmits a signalling message M5 to each respective proxy SCP containing MS A and MSISDN_id (step S6.7 - only correspondence with one such proxy SCP, namely proxy 31, is shown for the purposes of clarity). Steps S6.6 - S6.8 ensure that any subsequent requests for network service on the part of MS A can automatically be routed to the correct proxy SCPs and that, once received at a proxy SCP, the proxy SCP can perform a simple look-up to obtain a basis for transformation of MS A, and thence submit a signalling message to its associated SCP (including the transformed network identifier), in the manner described in relation to Figure 5.

For example, in the event that MS A subsequently makes a call (e.g. to MS B as shown in Figure 6), then in view of the fact that the originating switch MSC_O includes a set of additional triggers (each corresponding to a proxy SCP relating to an SCP in set S3), the switch MSC_O will route the signalling to the or each proxy SCP determined to be involved in providing service for the call. Assuming there to be only one proxy SCP involved in the call - namely proxy SCP 31 - when such a signalling message is received, the proxy SCP 31 will look-up an alias MSISDN_id for the calling party MS A (an alias having previously been received as a result of step S6.6), and submit a service request message to its associated SCP 33 based on the alias MSISDN_id, thereby allowing MS A access to the service provided by SCP 33, albeit under the guise of MSISDN_id.

This third embodiment could alternatively be applied to trigger a change of line (for Line 2 subscriptions), or at least to make available those services that are associated with a line other than the one currently activated. For example, the user of MS A could dial *89*Line 2 (assuming Line 1 to be the currently active line), which, when received by the service node 41, would prompt a request for service data corresponding to Line 2 from the HLR 115, and transmission of triggers corresponding to those services not forming part of the Line 1 subscription to the originating switch MSC_O at step S6.8.

As an alternative to the service node 41 identifying and formulating proxy triggers corresponding to services in set S3 at step S6.6, the service node 41 could alternatively send some or all of the services in the set S3, together with the calling line identifier corresponding to Line 2, to the originating switch MSC_O. Whilst the mechanism for triggering the line change is different to conventional methods, this would result in a service configuration that, point of view of the originating switch MSC_O, appears much like a line change as per standard methods.

### Additional Details and Modifications

The foregoing embodiments describe there being one proxy node associated with a given service node (SCP) or serving node (HLR 115); however, the invention could alternatively be implemented within a single logical proxy node, and all call requests corresponding to the proxy triggers (e.g. *79, *89) routed via the proxy node. The proxy node would then contain additional rules for controlling modification of data and routing of signalling messages to and from the appropriate network nodes (SCP, HLR etc.).

The foregoing embodiments describe methods for accessing services other than those associated with the subscriber's network identifier; in relation to those embodiments in which the process is triggered in response to dialled numbers starting with the '*' digit, access to these additional services can be cancelled by the subscriber dialling the hash key (#) followed by the corresponding numerical trigger (e.g. 79 or 89), this causing the originating switch to cancel all service data that has been made accessible since receipt of dialled digits associated with this '*' digit.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of providing a network service to a subscriber of a network, the subscriber having access to a first set of network services (S1) defined by a first subscriber identifier (MSISDN1), and wherein said network service to be provided is a member of a second set of services (S2), different to said first set of services, said second set of services (S2) being associated with a second subscriber identifier (MSISDN2) and the network service being provided by a service node (33) from which a subscriber associated with the second subscriber identifier is able to receive service during processing of a network event, the method comprising:
transmitting (S4.5; S5.5; S6.2) a first service initiation request message (M1) to a proxy node, the first service initiation request message including said data identifying said second subscriber identifier;
in response to receipt of the first service initiation request, formulating (S4.6; S5.6; S6.3) a second service initiation request message (M2) on the basis of the first service initiation request message; and
transmitting (S4.7; S5.7; S6.4) the second service initiation request message (M2) to the service node (33) so as to trigger provision of said network service in respect of the subscriber.

2. A method according to claim 1, including receiving (S4.1; S5.4; S6.1) a service set-up message comprising data indicative of a terminating party at a switch node (107), said received service set-up message including data corresponding to a trigger (*79; *89) stored at said switch node (107).

3. A method according to claim 2, in which said message comprises a call set-up message comprising data indicative of a called party (MS B).

4. A method according to claim 2, in which said message comprises a short message service set-up message comprising data indicative of a message recipient.

5. A method according to any one of claim 2 to claim 4, in which said trigger is part of said first set of network services defined by a first subscriber identifier.

6. A method according to any one of claim 2 to claim 5, in which said trigger is operable to effect said transmission of the first service initiation request message (M1).

7. A method according to any one of the preceding claims, including creating said first service initiation request message (M1) in response to receipt of a service set-up message at a switch node (107), said received service set-up message comprising said second subscriber identifier.

8. A method according to claim 7, in which said second subscriber identifier comprises an external identifier, said external identifier being for use outside of the network to route communications to one or more said devices within the network.

9. A method according to claim 7 or claim 8, in which said second subscriber identifier is associated with a subscriber other than that associated with the first subscriber identifier.

10. A method according to claim 7 or claim 8, in which said second subscriber identifier is associated with the subscriber associated with the first subscriber identifier.

11. A method according to any one of the preceding claims, in which the network event involves a calling party and a called party, and said second subscriber identifier corresponds to the calling party.

12. A method according to any one of the preceding claims, in which the network event involves a calling party and a called party, and said second subscriber identifier corresponds to the called party.

13. A method according to any one of the preceding claims, further comprising:
receiving (S6.4) a first service response message (M4) comprising data indicative of said network service;
responsive to receipt of said first service response message (M4), identifying (S6.6) a trigger corresponding to the proxy node; and
transmitting (S6.8) said identified trigger to a switch node.

14. A method according to claim 13, including receiving a first service response message comprising data indicative of a plurality of network services and identifying a plurality of triggers, each said trigger corresponding to one said network service.

15. A method according to claim 13 or claim 14, including transmitting (S6.7) a message (M5) comprising data indicative of said second subscriber identifier to the proxy node, for use in said step of formulating a second service initiation request message on the basis of the second subscriber identifier data.

16. A method of providing a set of network services to a subscriber of a network, the subscriber having access to a first set of network services (S1) defined by a first external identifier (MSISDN1) and a second set of network services (S2) defined by a second external identifier (MSISDN2), said external identifiers being for use outside of the network to route communications to a device within the network, wherein data identifying said first and second sets of network services are accessible from a data storage system (HLR), and the subscriber is registered with the network in respect of the first external identifier,
the method comprising transmitting an initial services set request message to a network node, the initial services set request message including data identifying the second external identifier;
formulating a second services set request message on the basis of the initial service set request message and transmitting the second services set request message to the data storage system so as to trigger provision of data identifying said second set of network services,
in which the initial services set request message is created in response to receipt of trigger data from the subscriber, said trigger data being contained within the first set of network services.

17. A method according to claim 16, in which said trigger data identifies said network node.

18. A method according to claim 16 or claim 17, in which the second set of network services is provided to a switch arranged to process registration request messages and service request messages from the subscriber.

19. A method according to claim 18, in which the switch is responsive to receipt of the trigger data from the subscriber so as to create the initial services set request message and forward same to the network node.

20. A system for providing a network service to a subscriber of a network, the subscriber having access to a first set of network services (S1) defined by a first subscriber identifier (MSISDN1), and wherein said network service to be provided is a member of a second set of services (S2), different to said first set of services, said second set of services (S2) being associated with a second subscriber identifier (MSISDN2) and the network service being provided by a service node (33) from which a subscriber associated with the second subscriber identifier is able to receive service during processing of a network event, the system comprising:
a proxy node (31) arranged to formulate a service initiation request message and to transmit the service initiation request message to the service node; and
means (107) arranged to transmit a first service initiation request message to the proxy node (31), the first service initiation request message including said data identifying said second subscriber identifier,
wherein the proxy node (31) is responsive to receipt of the first service initiation request so as to formulate a second service initiation request message (M2) on the basis of the first service initiation request message and to transmit the second service initiation request message (M2) to the service node (33) so as to trigger provision of said network service in respect of the subscriber.

21. A network node (31) for use in providing a network service to a subscriber of a network, the subscriber having access to a first set of network services (S1) defined by a first subscriber identifier (MSISDN1), and wherein said network service to be provided is a member of a second set of services (S2), different to said first set of services, said second set of services (S2) being associated with a second subscriber identifier (MSISDN2) and the network service being provided by a service node (33) from which a subscriber associated with the second subscriber identifier is able to receive service during processing of a network event, the network comprising means (107) arranged to transmit a first service initiation request message to the network node (31), the first service initiation request message including said data identifying said second subscriber identifier,
wherein the network node (31) is responsive to receipt of the first service initiation request so as to formulate a second service initiation request message (M2) on the basis of the first service initiation request message and to transmit the second service initiation request message (M2) to the service node (33) so as to trigger provision of said network service in respect of the subscriber.
